# FASCICULE DE BREVET EUROPEEN

(11) **EP 4 074 572 B1**
(45) Date de publication et mention de la délivrance du brevet: **07.08.2024**
(21) Numéro de dépôt: 22167872.5
(22) Date de dépôt: 12.04.2022
(51) Int. Cl.: B61C 9/50

(54) **BOGIE MOTEUR DE VÉHICULE FERROVIAIRE**
MOTORFAHRGESTELL FÜR SCHIENENFAHRZEUG
RAIL VEHICLE MOTOR BOGIE

(30) Priorité: 12.04.2021 FR 2103730
(43) Date de publication de la demande: 19.10.2022
(73) Titulaire: ALSTOM Holdings, 93400 Saint-Ouen-sur-Seine (FR)
(72) Inventeur: RODET, Alain, 71100 Chalon sur Saône (FR); FAURE, Ludovic, 71460 Saint Marcelin de Cray (FR)
(74) Mandataire: Lavoix

(56) Documents cités:
- EP-A1- 0 235 644
- EP-A1- 2 058 206
- EP-A1- 2 258 596
- EP-A1- 3 034 375
- FR-A- 816 106

## Description

La présente invention concerne un bogie moteur de véhicule ferroviaire selon le préambule de la revendication 1.

Dans un véhicule ferroviaire, et notamment dans un véhicule ferroviaire destiné au transport intra-urbain comme par exemple les tramways, il est souhaitable de limiter l'encombrement des bogies afin d'augmenter l'espace interne accessible aux voyageurs dans les voitures, et notamment prévoir un couloir large, tout en conservant un encombrement faible du véhicule ferroviaire sur la voie.

La réduction de l'encombrement des bogies sous la caisse permet de conserver un plancher bas, c'est-à-dire s'étendant sensiblement au même niveau sur toute la surface du véhicule ferroviaire et assez proche du sol. Par « véhicule à plancher bas », il est entendu que la hauteur maximale du plancher par rapport au sol ne doit pas dépasser 0,35 m, et que la pente maximale du plancher du véhicule est de 10 %. Il est ainsi possible d'accéder au véhicule à plancher bas de plain-pied à partir d'un trottoir ou d'un quai légèrement surélevé par rapport à la voie sur laquelle le véhicule circule.

Cela facilite aussi la circulation des voyageurs entre les voitures et l'accès au véhicule depuis l'extérieur, notamment pour les voyageurs ayant des difficultés à se déplacer, tout en maximisant le nombre de sièges installés au droit du bogie.

Dans un véhicule ferroviaire, chaque bogie moteur est pourvu de moyens d'entraînement en rotation de chaque essieu. Ces moyens d'entraînement comprennent au moins un moteur, au moins un réducteur et un dispositif mécanique assurant la transmission du couple moteur du moteur à l'essieu, et la transmission du couple de freinage de l'essieu au moteur, tout en permettant les mouvements relatifs entre le moteur et l'essieu induits par les suspensions primaires.

Les essieux du bogie sont généralement reliés par un châssis « extérieur », dans lequel les longerons sont disposés à l'extérieur d'un espace délimité par les roues, ou par un châssis « intérieur », dans lequel les longerons sont disposés à l'intérieur d'un espace délimité par les roues, c'est-à-dire entre les roues, sur des boites d'essieux également disposées à l'intérieur de l'espace délimité par les roues.

Le châssis intérieur permet de réduire la masse du bogie et de réduire ses coûts de fabrication.

Afin de réduire l'encombrement transverse du bogie, il est connu de disposer le ou les moteurs dans l'espace central du châssis.

Pour réduire les efforts verticaux dans la voie, il est avantageux de diminuer les masses non suspendues. Pour faciliter l'intégration des moyens d'entraînement, il est avantageux de diminuer les encombrements.

L'entraînement dit « moteur semi-suspendu » comprend traditionnellement un moteur qui repose oscillant sur l'essieu par deux paliers et sur lequel est fixé un carter de réducteur. Le pignon de sortie moteur engrène sur une roue calée sur l'essieu. Une bielle de réaction articulée permet de reprendre les couples et d'assurer les débattements dus aux mouvements entre le châssis de bogie et l'essieu. Cette transmission est simple à mettre en oeuvre mais présente des masses non suspendues élevées, ce qui limite la vitesse du véhicule.

Dans l'entraînement dit « à arbre creux », le réducteur et le moteur sont liés rigidement et fixés au châssis de bogie. Les couples sont transmis entre le palier de sortie du réducteur et l'essieu par un dispositif à arbre creux, qui assure aussi les débattements dus aux mouvements entre le châssis de bogie et l'essieu. Cette transmission augmente l'encombrement du bogie dans le sens de marche du véhicule. La place prise par l'arbre creux sur l'essieu impose de plus d'ajouter généralement une roue intermédiaire au réducteur. Cette solution permet au véhicule de circuler à des vitesses élevées mais elle est complexe à mettre en oeuvre car elle nécessite un palier creux en sortie de réducteur, des liaisons entre ce palier et l'arbre creux coté réducteur, ainsi qu'entre l'essieu et l'arbre creux.

L'entraînement dit à « réducteur semi-suspendu » est un compromis en termes de masses non suspendues et de complexité entre les deux précédents types d'entraînement. Le moteur est fixé sur le châssis de bogie et le réducteur est fixé d'une part oscillant sur l'essieu et lié d'autre part au châssis de bogie par une bielle de réaction. Un accouplement mécanique relie l'arbre moteur au palier d'entrée du réducteur et assure les débattements entre la sortie moteur et l'entrée du réducteur, débattements dus aux suspensions.

Dans le cas d'un bogie motorisé à châssis intérieur, il y a peu de place dans la direction transversale pour loger un moteur. Une première solution de l'état de l'art qui permette de loger un moteur puissant et la transmission associée, tout en limitant les masses non suspendues, est la suspension à arbre creux qui est complexe à mettre en oeuvre, comme décrit ci-dessus.

Une deuxième solution connue consiste à loger les réducteurs à l'intérieur des boîtes d'essieux et à intégrer une suspension secondaire dans des bielles en forme d'étrier reliant les longerons des demi-châssis, comme décrit dans le document EP 2 258 596 A1.

Cependant, ces solutions ne sont pas adaptées pour des véhicules à plancher bas.

EP 0 235 644 A1 décrit un bogie moteur de véhicule ferroviaire comprenant deux essieux et deux moteurs définissant chacun un axe de moteur. De plus, les boîtes d'essieu sont disposées à l'extérieur des roues.

EP 3 034 375 A1 décrit un bogie moteur pour véhicule ferroviaire comprenant deux essieux comprenant chacun une paire de roues. Le bogie comprend en outre au moins un moteur porté par l'une des traverses du châssis. Les réducteurs se trouvent à l'extérieur des roues.

L'un des buts de l'invention est de pallier ces inconvénients en proposant un bogie peu encombrant, de masse réduite, comprenant des masses non suspendues limitées et adapté à un véhicule à plancher bas.

A cet effet, l'invention concerne un bogie selon la revendication 1.

Selon d'autres caractéristiques du bogie, prises seules ou selon toute combinaison techniquement possible, le bogie comprend l'une ou plusieurs des caractéristiques des revendications 2 à 9.

L'invention concerne également un véhicule ferroviaire selon la revendication 10.

D'autres aspects et avantages de l'invention apparaîtront à la lecture de la description qui suit, donnée à titre d'exemple et faite en référence aux dessins annexés, dans lesquels :
- [Fig 1] la Figure 1 est une représentation schématique en perspective d'un bogie de véhicule ferroviaire selon l'invention,
- [Fig.2] la Figure 2 est une représentation schématique de côté d'un des deux essieux montés et d'un moteur du bogie de la figure 1, et
- [Fig 3] la Figure 3 est une représentation schématique de dessus d'un des deux essieux montés et d'un moteur du bogie de la figure 1, détaillant la transmission entre ledit moteur et ledit essieu monté.

Dans la description, les termes « vertical » et « horizontal » sont définis par rapport à un bogie monté dans un véhicule ferroviaire. Ainsi, un plan horizontal est sensiblement parallèle au plan dans lequel s'étendent les essieux et un plan vertical est sensiblement parallèle au plan dans lequel s'étendent les roues. Le terme « longitudinal » est défini par rapport à la direction dans laquelle s'étend un véhicule ferroviaire dans un plan horizontal et le terme « transversal » est défini selon une direction perpendiculaire à la direction longitudinale dans un plan horizontal.

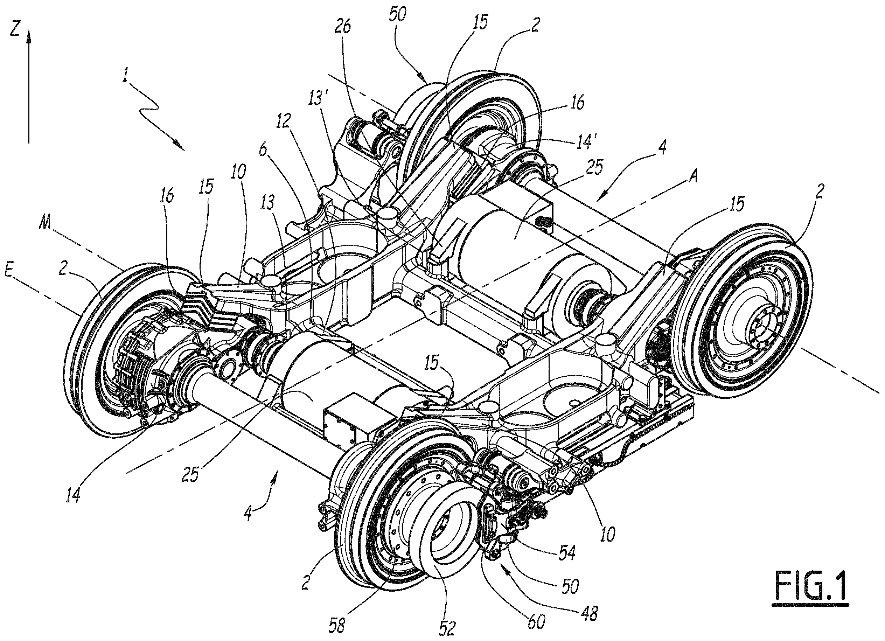

En référence à la Figure 1, on décrit un bogie motorisé 1 de véhicule ferroviaire (non représenté), par exemple un véhicule terrestre guidé. En particulier, le véhicule est un véhicule à plancher bas, par exemple un tramway ou une rame automotrice.

De préférence, le plancher abaissé s'étend sensiblement à un même niveau au droit du bogie 1.

Le bogie 1 comprend deux essieux montés 4, comportant chacun une paire de roues 2. Les essieux montés 4 sont reliés l'un à l'autre par un châssis 6, dit intérieur, portant les essieux montés 4. Par châssis intérieur, on entend que le châssis 6 s'étend entre les roues 2 selon la direction transversale sans « déborder » de celles-ci.

Chaque essieu monté 4 s'étend suivant un axe d'essieu E.

Le châssis 6 comprend deux longerons 10, s'étendant sensiblement longitudinalement, reliés l'un à l'autre par deux traverses 12, s'étendant sensiblement transversalement.

Chaque essieu monté 4 comporte des boites d'essieu 14, 14', lesdites boîtes d'essieu 14, 14' étant disposées sensiblement contre les roues 2 de l'essieu 4, entre lesdites roues 2.

Chaque longeron 10 présente deux extrémités longitudinales 15, chacune des extrémités longitudinales 15 reposant sur l'une respective des boîtes d'essieu 14, 14' de l'essieu monté 4 correspondant.

Un élément de suspension primaire 16 est par exemple interposé entre chaque extrémité longitudinale 15 d'un longeron 10 et la boîte d'essieu 14, 14' sur laquelle l'extrémité longitudinale 15 dudit longeron 10 repose.

L'élément de suspension primaire 16 est par exemple réalisé par deux plots caoutchouc, par exemple placés respectivement entre le longeron 10 et chaque boite d'essieu 14, 14'.

Cet élément de suspension primaire 16 permet un déplacement vertical relatif du châssis 6 par rapport aux essieux montés 4, c'est-à-dire que le châssis 6 est mobile et suspendu par rapport aux essieux montés 4 selon une direction sensiblement verticale. Les boîtes d'essieu 14 et 14' sont reliées au châssis 6 par des articulations élastiques 13 et 13'. La suspension primaire ainsi constituée des éléments de suspension primaire 16, des boîtes d'essieux 14 et 14' et des articulations 13 et 13', est dite de type boîte à bras.

La suspension primaire 16 reprend principalement les débattements verticaux.

La suspension primaire 16 est particulièrement peu encombrante.

Elle présente également l'avantage de permettre une diminution des masses non suspendues, avantage important surtout dans le cas d'un bogie motorisé.

Le bogie décrit est moteur, c'est-à-dire qu'au moins un des essieux 4 est entraîné en rotation par un moteur 25.

Chaque moteur 25 est disposé transversalement, c'est-à-dire que son arbre de rotation s'étend parallèlement à l'essieu monté 4 qu'il entraîne, suivant un axe de moteur M.

Le moteur 25 est notamment un moteur de type asynchrone.

De préférence, le moteur 25 est refroidi à l'eau.

Une telle architecture de bogie permet notamment de limiter les débattements angulaires entre l'axe M du moteur 25 et l'axe de l'essieu monté 4.

Le moteur 25 est par exemple fixe par rapport au châssis du bogie 1. Le moteur 25 est par exemple fixé à une traverse 12 du châssis 6 par deux pièces de fixation 26 présentant chacune sensiblement une forme d'équerre, et s'étend au voisinage de l'essieu monté 4 qu'il entraîne, sensiblement entre les deux roues 2.

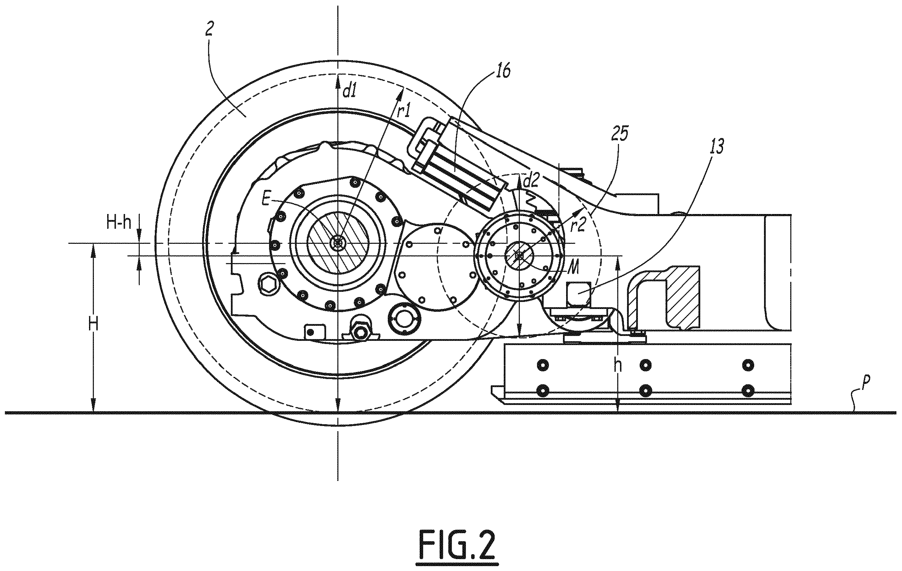

Comme cela est visible sur la Figure 2, l'axe M du moteur 25 est situé à une altitude h inférieure à une altitude H de l'axe E de l'essieu monté 4, l'altitude étant prise suivant un axe vertical Z perpendiculaire à l'axe longitudinal A et à l'axe d'essieu E et depuis un plan horizontal (P) perpendiculaire à l'axe vertical Z et tangent à la roue 2 en partie basse du bogie 1.

Certains paramètres sont à prendre en compte lors de la conception du bogie 1, notamment l'usure des roues 2, l'affaissement de suspension primaire, et le gabarit du bogie.

Au cours de la vie du bogie 1, les roues 2 ont tendance à s'user, et leur diamètre réduit en conséquence de cette usure.

L'altitude H de l'axe E de l'essieu monté 4 respectif diminue avec l'usure des roues 2.

Selon un mode de réalisation particulier, le diamètre d'une roue neuve est d'environ 660 mm. Le diamètre d1 d'une roue 2 usée est d'environ 580 mm. Le diamètre de la roue varie entre ces deux valeurs selon l'état d'usure de la roue.

Pendant le roulage, les suspensions primaires s'affaissent et se redressent en permanence.

Selon le mode de réalisation décrit, l'affaissement de suspension primaire est d'au plus environ 15 mm.

Le gabarit du bogie 1 se traduit par l'altitude minimale à laquelle tous les éléments du bogie, à l'exception des roues, doivent se situer pour des raisons de sécurité.

Selon le mode de réalisation décrit, le gabarit est par exemple d'environ 80 mm.

Par conséquent, tous les éléments du bogie 1, à l'exception des roues 2, lorsqu'il n'est pas en roulage, doivent se situer à une altitude au moins égale à la somme du gabarit et de l'affaissement de suspension primaire.

Le moteur 25 doit donc se situer à une altitude au moins égale à la somme du gabarit et de l'affaissement de suspension primaire.

Selon le mode de réalisation décrit, cette somme est d'environ 95 mm.

Selon ce mode de réalisation, l'axe M du moteur 25 est situé à une altitude h inférieure d'au moins 20 mm à une altitude H de l'axe E de l'essieu monté 4, par exemple environ 25 mm.

Selon ce mode de réalisation, le moteur 25 présente par exemple un diamètre d2 pris suivant la direction verticale Z d'environ 320 mm et une longueur prise suivant l'axe M du moteur 25 d'environ 750 mm. Un rayon r2 du moteur 25 pris suivant la direction verticale Z d'environ 320 mm est ainsi d'environ 160 mm.

Avantageusement, la somme du gabarit du bogie 1, de l'affaissement de la suspension primaire et du rayon r2 du moteur 25 est inférieure au rayon r1 de la roue 2 usée.

Avantageusement encore, un rapport entre le résultat de la différence H-h entre l'altitude H de l'axe E de l'essieu monté 4 et l'altitude h de l'axe M du moteur 25, et un diamètre d1 de la roue 2 lorsqu'elle est usée est supérieur à 3 %, de préférence supérieur à 5 %.

La vitesse de rotation maximale du moteur 25 est par exemple d'environ 5900 tr/mn pour une roue semi-usée à une vitesse du véhicule d'environ 80 km/h.

L'utilisation de tels moteurs permet d'agencer le plancher avec une pente qui ne soit pas trop forte.

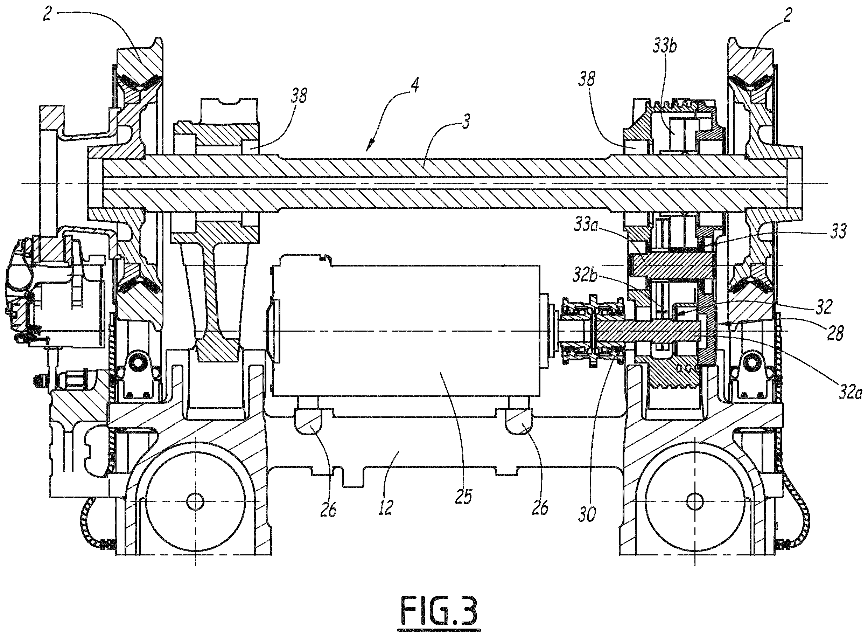

Comme représenté sur la Figure 3, un réducteur 28 est placé dans l'une des boîtes d'essieu 14, de l'essieu monté 4 entraîné par le moteur 25. Les paliers 38 de la boite d'essieu 14 servent aussi de paliers à une couronne dentée du réducteur 28. De ce fait, le réducteur 28 peut être placé au plus près de la roue 2. La disposition du réducteur 28 dans une boîte d'essieu 14 permet d'augmenter la largeur de couloir du véhicule ferroviaire, et d'augmenter la longueur du moteur 25. Le carter de réducteur joue ainsi le rôle de boite d'essieu.

Selon un mode de réalisation particulier, le rapport de réduction du réducteur 28, défini par le ratio entre la vitesse d'entrée et la vitesse de sortie, est compris entre 6,5 et 10, par exemple sensiblement égal à 8.

Une telle disposition permet un accès aux roues simplifié et de placer le système de freinage du bogie à l'extérieur de l'espace délimité par les roues, comme cela sera décrit plus loin.

Comme représenté sur la Figure 3, un accouplement 30 est agencé entre le moteur 25 et le réducteur 28. Cet accouplement est par exemple à dentures bombées, ou est de tout autre type absorbant de faibles débattements entre le châssis de bogie et l'essieu.

Le moyen d'entraînement est décrit ci-après :
L'arbre de rotation du moteur 25 est lié en sortie à l'entrée de l'accouplement 30.

La sortie de l'accouplement 30 est liée à un premier engrenage 32. Le premier engrenage 32 comprend par exemple un pignon 32a et une couronne dentée 32b.

Le premier engrenage 32 du réducteur 28 est lié à un deuxième engrenage 33. Le deuxième engrenage 33 comprend par exemple un pignon 33a et une couronne dentée 33b.

Le premier engrenage 32 du réducteur 28 est mobile en rotation autour d'un premier axe sensiblement perpendiculaire à l'axe longitudinal A.

Le deuxième engrenage 33 du réducteur 28 est mobile en rotation autour d'un second axe sensiblement perpendiculaire à l'axe longitudinal A.

Le premier engrenage 32 du réducteur 28 et le deuxième engrenage 33 du réducteur 28 présentent des dentures hélicoïdales.

La couronne 33b du deuxième engrenage 33 du réducteur 28 est calée sur l'essieu monté 4.

Bien entendu, dans l'exemple décrit le réducteur 28 comprend deux engrenages 32, 33 mais pourrait comprendre davantage d'engrenages sans s'éloigner de l'esprit de l'invention.

L'essieu monté 4, et notamment ses roues 2, est entraîné en rotation par le moteur 25.

L'essieu monté 4 tourne au moyen de paliers 38, qui sont disposés dans les boîtes d'essieu 14, 14'.

Comme l'accouplement 30 est proche des articulations élastiques 13, 13' de suspension primaire, les débattements y sont minimisés. Ces mouvements faibles permettent d'installer un accouplement à dentures entre le moteur et le réducteur qui prennent peu de débattements angulaires.

Un tel agencement de transmission est particulièrement peu encombrant. Le bogie moteur selon l'invention comprend ainsi un châssis 6 intérieur léger, un moteur 25 suspendu, et un réducteur 28 semi-suspendu, ainsi qu'une transmission simple à mettre en oeuvre.

En outre, la maintenance du bogie est facilitée par l'accessibilité aux roues.

La transmission est aussi de longueur réduite grâce au débattement vertical réduit procuré par la suspension primaire 16 au niveau de l'accouplement 30.

Le bogie 1 comprend un système de freinage 48.

Le système de freinage 48 comprend au moins un dispositif de freinage 50 monté sur une roue 2 à l'extérieur de l'espace délimité par les roues 2.

De préférence, le système de freinage 48 comprend au moins un dispositif de freinage 50 monté sur une roue 2 de chaque essieu monté 4 et de chaque côté longitudinal du bogie 1 à l'extérieur de l'espace délimité par les roues 2.

Chaque dispositif de freinage 50 comprend un disque 52 et une pince de freinage 54 agissant sur le disque 52.

Le disque 52 a un diamètre inférieur à celui de la roue 12.

Le disque 52 est par exemple en fonte ou acier.

Le disque 52 est relié à la roue associée par une liaison rigide 58, le disque 52 et la roue 2 étant solidaires en rotation autour de l'axe de l'essieu monté 4.

La liaison rigide 58 relie le centre de la roue 12 et le centre du disque 52, la liaison rigide 58 s'étendant selon une direction transversale.

La liaison rigide 58 est ici formée d'une partie de la structure d'essieu monté 4, c'est-à-dire que la structure d'essieu monté 4 s'étend entre les dispositifs de freinage 52 monté à l'extérieur de l'espace délimité par les roues 2 d'une paire et traverse lesdites roues 2 de la paire.

Pour chaque dispositif de freinage 50, la pince de freinage 54 présente deux plaquettes 60 aptes à entrer en friction avec chaque côté du disque 52 dans une position de freinage.

En dehors de la position de freinage, les plaquettes 60 ne frottent pas contre le disque 52.

Les plaquettes 60 sont, par exemple, réalisées en matériau composite ou matériau fritté.

Chaque essieu monté 4 est dépourvu de disque de freinage entre les deux roues 2.

Le fait que le réducteur 28 se trouve dans la boîte d'essieu 14 donne la possibilité d'installer jusqu'à quatre dispositifs de freinage 50 répartis à l'extérieur de l'espace délimité par les roues 2.

Le réducteur ne prend pas la place d'un disque de frein et libère ainsi de l'espace. Le fait de disposer de deux disques de frein par essieu monté est très intéressant, notamment dans le cas d'une automotrice.

Le bogie de véhicule ferroviaire selon l'invention permet d'avoir un plancher abaissé intégral, tout en conservant un encombrement transverse suffisamment faible du véhicule ferroviaire.

## Revendications

1. Bogie moteur (1) de véhicule ferroviaire comprenant deux essieux montés (4) comprenant chacun une paire de roues (2), chaque essieu monté (4) s'étendant suivant un axe d'essieu (E), lesdits essieux montés (4) étant reliés l'un à l'autre par un châssis (6) comprenant au moins deux longerons (10) s'étendant sensiblement parallèlement à un axe longitudinal (A) et reposant sur des boîtes d'essieu (14, 14') de chaque essieu monté (4), lesdites boîtes (14, 14') étant disposées entre les roues (2) dudit essieu monté (4), au moins un moteur (25) fixé au châssis (6) et s'étendant entre les roues (2) de l'essieu monté (4) et entraînant la rotation dudit essieu monté (4) par l'intermédiaire d'un accouplement (30) et d'un réducteur (28), l'une des boîtes d'essieu (14) logeant le réducteur (28) du moteur (25), le moteur (25) étant mobile en rotation autour d'un axe de moteur (M), **caractérisé en ce que** l'axe (M) du moteur (25) est situé à une altitude (h) inférieure à une altitude (H) de l'axe (E) de l'essieu monté (4), l'altitude étant prise suivant un axe vertical (Z) perpendiculaire à l'axe longitudinal (A) et à l'axe d'essieu (E) depuis un plan horizontal (P) perpendiculaire à l'axe vertical (Z) et tangent à la roue (2) en partie basse du bogie (1).

2. Bogie moteur (1) selon la revendication 1, dans lequel le réducteur (28) comprend au moins un premier engrenage (32) mobile en rotation autour d'un premier axe sensiblement perpendiculaire à l'axe longitudinal (A) et un deuxième engrenage (33) mobile en rotation autour d'un second axe sensiblement perpendiculaire à l'axe longitudinal (A), le premier engrenage (32) et le deuxième engrenage (33) étant propres à coopérer entre eux.

3. Bogie moteur (1) selon la revendication 2, dans lequel chaque engrenage (32, 33) comprend un pignon (32a, 33b) et une couronne dentée (32b, 33b), les couronnes dentées (32b, 33b) présentant chacune une denture hélicoïdale.

4. Bogie moteur (1) selon l'une quelconque des revendications 1 à 3, dans lequel un rapport entre le résultat de la différence entre l'altitude (H) de l'axe (E) de l'essieu monté (4) et l'altitude (h) de l'axe (M) du moteur (25), et un diamètre de la roue (2) lorsqu'elle est usée est supérieur à 1 %, de préférence à 3%.

5. Bogie moteur (1) selon l'une quelconque des revendications 1 à 4, le bogie (1) comprenant un système de freinage (48) comprenant au moins un dispositif de freinage (50) monté sur au moins l'une des roues (2) à l'extérieur de l'espace délimité par les roues (2).

6. Bogie moteur (1) selon la revendication 5, dans lequel le système de freinage (48) comprend un dispositif de freinage (50) monté sur l'une des deux roues (2) de chaque côté longitudinal du bogie (1) à l'extérieur de l'espace délimité par les roues (2), l'autre roue (2) de chaque côté longitudinal du bogie (1) étant de préférence dépourvue de dispositif de freinage (50).

7. Bogie moteur (1) selon la revendication 5, dans lequel le système de freinage (48) comprend quatre dispositifs de freinage (50) montés chacun sur une roue (2) respective à l'extérieur de l'espace délimité par les roues (2).

8. Bogie moteur (1) selon l'une quelconque des revendications 1 à 7, **caractérisé en ce qu'**il comprend une suspension primaire agencée entre le châssis (6) et chaque essieu monté (4), et configurée pour permettre un déplacement vertical relatif du châssis (6) par rapport aux essieux montés (4).

9. Bogie moteur (1) selon l'une quelconque des revendications 1 à 8, **caractérisé en ce que** le bogie (1) comprend deux moteurs (25), chaque moteur (25) entraînant en rotation l'un respectif des essieux (4) par l'intermédiaire d'un accouplement (30) et d'un réducteur (28), chaque moteur (25) s'étendant entre les roues (2) dudit essieu (4).

10. Véhicule ferroviaire, **caractérisé en ce qu'**il comporte au moins un bogie moteur (1) selon l'une quelconque des revendications 1 à 9, et une caisse de véhicule portée par le bogie (1), la caisse comprenant de préférence un plancher abaissé, s'étendant sensiblement à un même niveau au droit du bogie (1).

## Patentansprüche

1. Triebdrehgestell (1) eines Schienenfahrzeugs, umfassend zwei Radsätze (4), jeweils umfassend ein Räderpaar (2), wobei sich jeder Radsatz (4) entlang einer Radsatzachse (E) erstreckt, wobei die Radsätze (4) durch einen Rahmen (6) miteinander verbunden sind, umfassend mindestens zwei Längsträger (10), die sich im Wesentlichen parallel zu einer Längsachse (A) erstrecken und auf Achslagern (14, 14') von jedem Radsatz (4) ruhen, wobei die Achslager (14, 14') zwischen den Rädern (2) des Radsatzes (4) angeordnet sind, wobei mindestens ein Motor (25) an dem Rahmen (6) befestigt ist und sich zwischen den Rädern (2) des Radsatzes (4) erstreckt und die Drehung des Radsatzes (4) über eine Kupplung (30) und ein Untersetzungsgetriebe (28) antreibt, wobei eines der Achslager (14) das Untersetzungsgetriebe (28) des Motors (25) aufnimmt, wobei der Motor (25) um eine Motorachse (M) drehbar ist, **dadurch gekennzeichnet, dass** die Achse (M) des Motors (25) in einer Höhe (h) angeordnet ist, die niedriger ist als eine Höhe (H) der Achse (E) des Radsatzes (4), wobei die Höhe entlang einer vertikalen Achse (Z) senkrecht zu der Längsachse (A) und zu der Radsatzachse (E) von einer horizontalen Ebene (P) senkrecht zu der vertikalen Achse (Z) und tangential zu dem Rad (2) im unteren Teil des Drehgestells (1) aufgenommen ist.

2. Triebdrehgestell (1) nach Anspruch 1, wobei das Untersetzungsgetriebe (28) mindestens ein erstes Zahnrad (32), das um eine erste Achse drehbar ist, die im Wesentlichen senkrecht zu der Längsachse (A) ist, und ein zweites Zahnrad (33), das um eine zweite Achse drehbar ist, die im Wesentlichen senkrecht zu der Längsachse (A) ist, umfasst, wobei das erste Zahnrad (32) und das zweite Zahnrad (33) geeignet sind, um untereinander zusammenzuwirken.

3. Triebdrehgestell (1) nach Anspruch 2, wobei jedes Zahnrad (32, 33) ein Ritzel (32a, 33b) und einen Zahnkranz (32b, 33b) umfasst, wobei die Zahnkränze (32b, 33b) jeweils eine Schrägverzahnung aufweisen.

4. Triebdrehgestell (1) nach einem der Ansprüche 1 bis 3, wobei ein Verhältnis zwischen dem Resultat der Differenz zwischen der Höhe (H) der Achse (E) des Radsatzes (4) und der Höhe (h) der Achse (M) des Motors (25), und einem Durchmesser des Rads (2), wenn es abgenutzt ist, größer ist als 1 %, vorzugsweise 3 %.

5. Triebdrehgestell (1) nach einem der Ansprüche 1 bis 4, das Drehgestell (1) umfassend ein Bremssystem (48), umfassend mindestens eine Bremsvorrichtung (50), die an mindestens einem der Räder (2) außerhalb des von den Rädern (2) begrenzten Raums montiert ist.

6. Triebdrehgestell (1) nach Anspruch 5, wobei das Bremssystem (48) eine Bremsvorrichtung (50) umfasst, die an einem der zwei Räder (2) auf jeder Längsseite des Drehgestells (1) außerhalb des von den Rädern (2) begrenzten Raums montiert ist, wobei dem anderen Rad (2) auf jeder Längsseite des Drehgestells (1) vorzugsweise eine Bremsvorrichtung (50) fehlt.

7. Triebdrehgestell (1) nach Anspruch 5, wobei das Bremssystem (48) vier Bremsvorrichtungen (50) umfasst, die jeweils an einem entsprechenden Rad (2) außerhalb des von den Rädern (2) begrenzten Raums montiert sind.

8. Triebdrehgestell (1) nach einem der Ansprüche 1 bis 7, **dadurch gekennzeichnet, dass** es eine primäre Aufhängung umfasst, die zwischen dem Rahmen (6) und jedem Radsatz (4) angeordnet und konfiguriert ist, um eine relative vertikale Verschiebung des Rahmens (6) in Bezug auf die Radsätze (4) zu ermöglichen.

9. Triebdrehgestell (1) nach einem der Ansprüche 1 bis 8, **dadurch gekennzeichnet, dass** das Drehgestell (1) zwei Motoren (25) umfasst, wobei jeder Motor (25) über eine Kupplung (30) und ein Untersetzungsgetriebe (28) eine jeweilige der Achsen (4) in Drehung versetzt, wobei sich jeder Motor (25) zwischen den Rädern (2) der einen Achse (4) erstreckt.

10. Schienenfahrzeug, **dadurch gekennzeichnet, dass** es mindestens ein Triebdrehgestell (1) nach einem der Ansprüche 1 bis 9 und einen von dem Drehgestell (1) getragenen Wagenkasten umfasst, der Wagenkasten vorzugsweise umfassend einen abgesenkten Boden, der sich im Wesentlichen auf gleicher Höhe rechts neben dem Drehgestell (1) erstreckt.

## Claims

1. Rail vehicle drive bogie (1) comprising two wheelsets (4) each comprising a pair of wheels (2), each wheel set (4) extending along a wheel set axis (E), said wheelsets (4) being connected to each other by a chassis (6) comprising at least two longitudinal members (10) extending substantially parallel to a longitudinal axis (A) and resting on wheel set boxes (14, 14') of each wheel set (4), the said axleboxes (14, 14') being arranged between the wheels (2) of the said wheel set (4), at least one motor (25) fixed to the chassis (6) and extending between the wheels (2) of the wheel set (4) and driving the rotation of the said wheel set (4) via a coupling (30) and a gearbox (28), one of the axleboxes (14) housing the gearbox (28) of the motor (25), the motor (25) being able to rotate about a motor axis (M), **characterised in that** the axis (M) of the motor (25) is located at an altitude (h) lower than an altitude (H) of the axis (E) of the wheel set (4), the altitude being taken along a vertical axis (Z) perpendicular to the longitudinal axis (A) and to the axle axis (E) from a horizontal plane (P) perpendicular to the vertical axis (Z) and tangent to the wheel (2) at the bottom of the bogie (1).

2. A drive bogie (1) as claimed in claim 1, in which the gearbox (28) comprises at least a first gear (32) rotatable about a first axis substantially perpendicular to the longitudinal axis (A) and a second gear (33) rotatable about a second axis substantially perpendicular to the longitudinal axis (A), the first gear (32) and the second gear (33) being suitable for cooperating with each other.

3. A drive bogie (1) as claimed in claim 2, wherein each gear (32, 33) comprises a pinion (32a, 33b) and a ring gear (32b, 33b), the ring gears (32b, 33b) each having helical teeth.

4. A drive bogie (1) according to any one of claims 1 to 3, wherein a ratio between the result of the difference between the altitude (H) of the axis (E) of the wheel set (4) and the altitude (h) of the axis (M) of the motor (25), and a diameter of the wheel (2) when it is worn is greater than 1%, preferably 3%.

5. A drive bogie (1) according to any one of claims 1 to 4, the bogie (1) comprising a braking system (48) comprising at least one braking device (50) mounted on at least one of the wheels (2) outside the space delimited by the wheels (2).

6. A drive bogie (1) according to claim 5, in which the braking system (48) comprises a braking device (50) mounted on one of the two wheels (2) on each longitudinal side of the bogie (1) outside the space delimited by the wheels (2), the other wheel (2) on each longitudinal side of the bogie (1) preferably not having a braking device (50).

7. A drive bogie (1) according to claim 5, wherein the braking system (48) comprises four braking devices (50) each mounted on a respective wheel (2) outside the space delimited by the wheels (2).

8. A drive bogie (1) according to any one of claims 1 to 7, **characterised in that** it comprises a primary suspension arranged between the chassis (6) and each wheel set (4), and configured to allow relative vertical displacement of the chassis (6) with respect to the wheel sets (4).

9. A drive bogie (1) according to any one of claims 1 to 8, **characterised in that** the bogie (1) comprises two motors (25), each motor (25) rotating a respective one of the axles (4) via a coupling (30) and a gearbox (28), each motor (25) extending between the wheels (2) of said axle (4).

10. A railway vehicle, **characterised in that** it comprises at least one motor bogie (1) according to any one of claims 1 to 9, and a vehicle body carried by the bogie (1), the body preferably comprising a lowered floor extending substantially at the same level as the bogie (1).
